# EUROPÄISCHE PATENTSCHRIFT

(11) **EP 1 537 772 B1**
(45) Veröffentlichungstag und Bekanntmachung des Hinweises auf die Patenterteilung: **24.01.2007**
(21) Anmeldenummer: 04106139.1
(22) Anmeldetag: 29.11.2004
(51) Int. Cl.: A01F 29/22

(54) **Häckselvorrichtung mit Schleifvorrichtung**
Chopping device with sharpening device
Dispositif hacheur avec dispositif d'affûtage

(30) Priorität: 06.12.2003 DE 10357177
(43) Veröffentlichungstag der Anmeldung: 08.06.2005
(73) Patentinhaber: DEERE & COMPANY, Moline, Illinois 61265-8098 (US)
(72) Erfinder: Clauss, Steffen, 66509, Rieschweiler-Mühlbach (DE)
(74) Vertreter: Holst, Sönke

(56) Entgegenhaltungen:
- EP-A- 1 145 800
- DE-A1- 10 035 743

## Beschreibung

Die Erfindung betrifft eine Häckseleinrichtung mit mindestens einem Messer sowie einer Schleifvorrichtung mit einem Schleifstein zum Schleifen des Messers, einer Bewegungseinrichtung zum Bewegen des Schleifsteins entlang der Häckseleinrichtung, einer Messeinrichtung zur Bereitstellung eines Signals, das eine Information über die beim Schleifvorgang vom Schleifstein auf das Messer ausgeübte Kraft enthält, und einer Steuerung, die die Bewegungseinrichtung in Abhängigkeit von dem Signal der Messeinrichtung steuert.

Beim Betrieb eines Feldhäckslers nutzen sich die an der Häckseleinrichtung befestigten Messer mit der Zeit ab. Es ist möglich, dass einzelne Messer unterschiedlich stark verschleißen. Während sich die Messer über den Umfang der Häckseleinrichtung in der Regel näherungsweise gleichmäßig abnutzen, kann die Abnutzung über die Breite der Häckseleinrichtung sehr unterschiedlich sein. Somit kann der Durchmesser des von den Schneidkanten der Messer beschriebenen Hüllkreises in axialer Richtung der Welle der Häckseleinrichtung variieren. Eine zylindrische oder leicht konkave Form wird angestrebt, um ein automatisches Einstellen der Gegenschneide zu vereinfachen oder je nach Einstellsystem erst möglich zu machen. Eine parallele und exakte Zustellung der Gegenschneide zum Umfang der Häckseleinrichtung ist für einen effektiven Häckselprozess unabdingbar.

In der DE 100 35 743 A wurde zur Vermeidung dieses Problems vorgeschlagen, vor einem Schleifvorgang die aktuelle Form des von den Messern einer Häckseleinrichtung beschriebenen Hüllkreises zu erfassen und den Schleifstein anschließend basierend auf dem Ergebnis der Messung derart zu bewegen, dass eine gewünschte Form des Hüllkreises erzielt wird. Die Form des Hüllkreises wird mittels eines dem Schleifstein oder der Gegenschneide zugeordneten Klopfsensors oder eines magnetischen Sensors erfasst. Alternativ wird die Kraft an der Gegenschneide gemessen.

Als nachteilig ist bei einer Messung des Abstands zwischen der Gegenschneide und den Messern mittels magnetischer Sensoren, Klopfsensoren oder Kraftsensoren anzusehen, dass man eine Information über den jeweiligen Drehwinkel der Häckseleinrichtung benötigt, um den jeweils gewonnenen Abstandsmesswert dem zugehörigen Messer zuordnen zu können. Bei hohen Drehgeschwindigkeiten kann sich außerdem die Zuordnung als problematisch erweisen. Zudem kann eine mögliche nicht zur Welle der Häckseleinrichtung parallele Fehlstellung der Gegenschneide einen verfälschenden Einfluss auf das Messergebnis haben. Wird der Abstand am Schleifstein induktiv oder durch einen Klopfsensor ermittelt, sind Probleme bei der Zuordnung der Messwerte zu einem konkreten Abstand möglich, da das Schwingungsverhalten des Schleifsteins und die von ihm erzeugten Geräusche von seinem Verschleißzustand abhängen. Induktive Messverfahren hängen vom Zustand der Messer ab und sind deshalb ebenfalls problematisch.

Die EP 1 145 800 A beschreibt eine Vorrichtung zum Schleifen von Messern Fleisch verarbeitender Maschinen, bei der ein Sensor zur Erfassung der Berührung des Schleifwerkzeugs mit dem zu schleifenden Messer vorgesehen ist. Es wird die Möglichkeit erwähnt, einen Zug- und/oder Druckmesswertaufnehmer am Schleifwerkzeug bzw. dessen Halterung anzubringen, um bei einer Berührung zwischen Schleifwerkzeug und Werkzeug die Belastung zu erfassen. Bei dieser Vorrichtung muss das Messer vor dem Schleifen aus der Maschine ausgebaut werden, was sehr zeitaufwändig ist.

Das der Erfindung zu Grunde liegende Problem wird darin gesehen, eine gegenüber dem Stand der Technik verbesserte Schleifvorrichtung bereitzustellen, bei der die erwähnten Probleme nicht oder in einem geringeren Maße vorliegen.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Erfindung schlägt vor, eine Kraftmesszelle an einer beliebigen Stelle im Verbindungsstrang oder Kraftfluss zwischen dem Schleifstein und der Häckseleinrichtung anzubringen. Die Kraftmesszelle erfasst die Kraft bzw. den Druck, den der Schleifstein während des Schleifvorgangs auf das oder die Messer der Häckseleinrichtung ausübt. Der Messwert der Kraftmesszelle ist umso größer, je näher sich die vom Messer beschriebene Hüllkurve jeweils am Schleifstein befindet, bzw. umso kleiner, je weiter das Messer von ihm entfernt ist.

Auf diese Weise erhält man einen absoluten und genauen Messwert, der eine Information über die aktuelle Form des Messers enthält. Die Häckseleinrichtung kann in eine optimale Form gebracht werden, welche die Einstellung eines hinreichend engen Schneidspalts ermöglicht. Dadurch kann der Energieaufwand beim Häckseln reduziert bzw. bei gleichem Energieaufwand eine höhere Durchsatzleistung erzielt werden. Außerdem wird die Häckselqualität (d. h. die Genauigkeit und die Gleichmäßigkeit) der Schnittlänge verbessert. Der Anteil ungeschnittener Bestandteile (z. B. Lieschblätter) wird stark reduziert oder sogar eliminiert.

Die Bewegungseinrichtung des Schleifsteins wird von der Steuerung derart gesteuert, dass der Schleifstein die Schneidkante des Messers in eine bestimmte Sollform bringt, bei der es sich um eine vorbestimmte Form oder um eine unter mehreren Vorgaben auswähl- bzw. beliebig eingebbare Sollform handeln kann. Um die Sollform der Schneidkante des Messers zu erreichen, kann die Steuerung einen Vergleich zwischen der von der Messeinrichtung bereitgestellten Information über die Ist-Form der Schneidkante und der Sollform durchführen und die Bewegungseinrichtung in Abhängigkeit vom Ergebnis des Vergleiches steuern. Dabei wird der den Schleifstein über die Breite der Häckseleinrichtung transportierende und ihn ihr zustellende Bewegungseinrichtung von der Steuerung in Abhängigkeit von dem Signal der Messeinrichtung gesteuert und veranlasst, den Schleifstein so zu bewegen, dass Abweichungen in der Form der Schneidkanten der Messer selbsttätig ausgeglichen werden.

Bei der Häckseleinrichtung kann es sich um eine Häckseltrommel in offener oder geschlossener Form handeln, an der mehrere Messer angebracht sind. Die Häckseltrommel ist auf einer Welle angeordnet, die beim Schleifen in Rotation versetzt wird und sich in der Regel gegenüber dem normalen Häckselbetrieb in Gegenrichtung dreht. Die Messeinrichtung erfasst bei derartigen Häckseltrommeln eine Information über den Abstand zwischen der Welle und den Schneidkanten der Messer, also über den Radius des von den Schneidkanten beschriebenen Hüllkreises. Die Erfindung kann aber auch an Häckseleinrichtungen von Scheibenradhäckslern Verwendung finden. Dort wird nicht der Radius der Schneidkanten der Messer erfasst, sondern ihre axiale Position.

Die Kraftmesszelle kann zwischen einer Schleifsteinhalterung des Schleifsteins und einem Rahmen angebracht sein, an dem die Schleifsteinhalterung befestigt ist und der auch die Häckseleinrichtung trägt. Die Schleifsteinhalterung ist in der Regel entlang der Breite der Häckseleinrichtung verfahrbar auf einer Achse gelagert. Die Kraftmesszelle kann dann zwischen der Achse und dem Rahmen angeordnet sein, bzw. zwischen der Achse und der Schleifsteinhalterung.

Alternativ oder zusätzlich besteht die Möglichkeit, die Kraftmesszelle zwischen dem Schleifstein und der Schleifsteinhalterung anzuordnen.

Die Steuerung kann außerdem ein Fehlersignal bereitstellen, falls die gemessene, auf den Schleifstein ausgeübte Kraft einen Schwellenwert übersteigt. Dieses Fehlersignal kann einem Bediener optisch oder akustisch zur Anzeige gebracht werden und weist auf ein zu weit nach außen überstehendes Messer hin. Außerdem kann in diesem Fall der Schleifvorgang selbsttätig abgebrochen werden. Dadurch kann eine Beschädigung (Ausbrechen) oder ein unüblicher Verschleiß des Schleifsteins vermieden werden, da im Falle zu hoher Kräfte zwischen dem Schleifstein und der Trommel Gegenmaßnahmen ergriffen werden.

Die vorliegende Erfindung ist an einer Vielzahl von Einrichtungen mit zu schärfenden Messern verwendbar. Sie kann insbesondere an selbstfahrenden oder gezogenen Erntemaschinen mit Häckseltrommeln oder Scheibenradhäckslern benutzt werden.

In den Zeichnungen sind zwei nachfolgend näher beschriebene Ausführungsbeispiele der Erfindung dargestellt. Es zeigt:
- Fig. 1: eine Erntemaschine mit einer Häckseleinrichtung in Seitenansicht und in schematischer Darstellung,
- Fig. 2: eine Vorderansicht einer ersten Ausführungsform einer Schleifvorrichtung, und
- Fig. 3: eine Vorderansicht einer zweiten Ausführungsform einer Schleifvorrichtung.

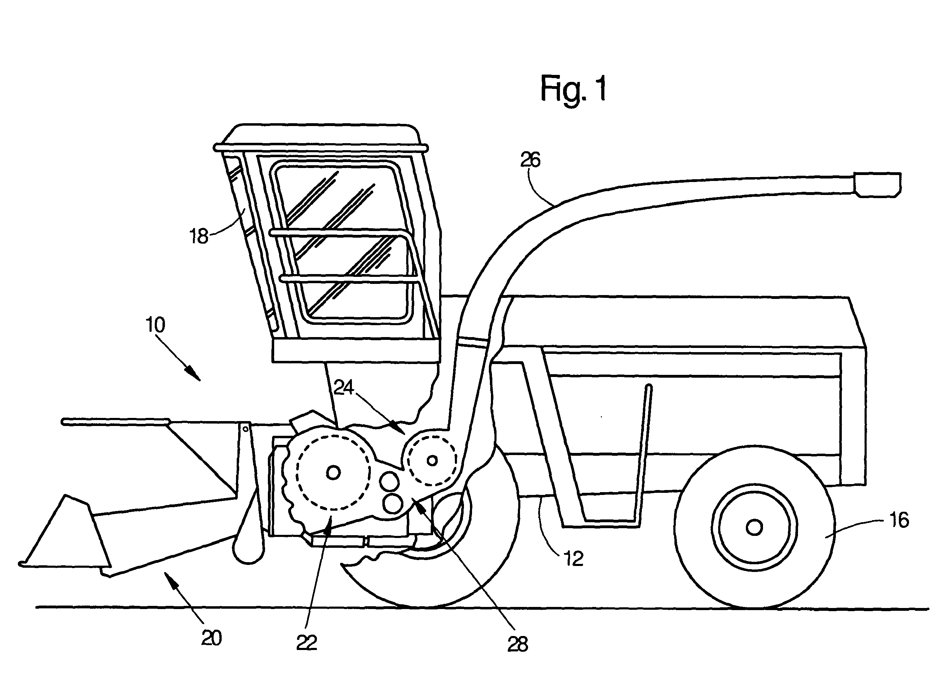

Die in Figur 1 gezeigte Erntemaschine 10 in der Art eines selbstfahrenden Feldhäckslers baut sich auf einem Rahmen 12 auf, der von vorderen und rückwärtigen Rädern 14 und 16 getragen wird. Die Bedienung der Erntemaschine 10 erfolgt von einer Fahrerkabine 18 aus, von der aus eine Erntegutaufnahmevorrichtung 20 einsehbar ist. Mittels der Erntegutaufnahmevorrichtung 20 vom Boden aufgenommenes Gut, z. B. Mais, Gras oder dergleichen wird einer Häckseleinrichtung 22 in Form einer Häckseltrommel zugeführt, die es in kleine Stücke häckselt und es einer Fördervorrichtung 24 aufgibt. Das Gut verlässt die Erntemaschine 10 zu einem nebenher fahrenden Anhänger über einen drehbaren Austragsschacht 26. Zwischen der Häckseleinrichtung 22 und der Fördervorrichtung 24 erstreckt sich (bei der Maisernte) eine Nachzerkleinerungsvorrichtung 28, durch die das zu fördernde Gut der Fördervorrichtung 24 tangential zugeführt wird.

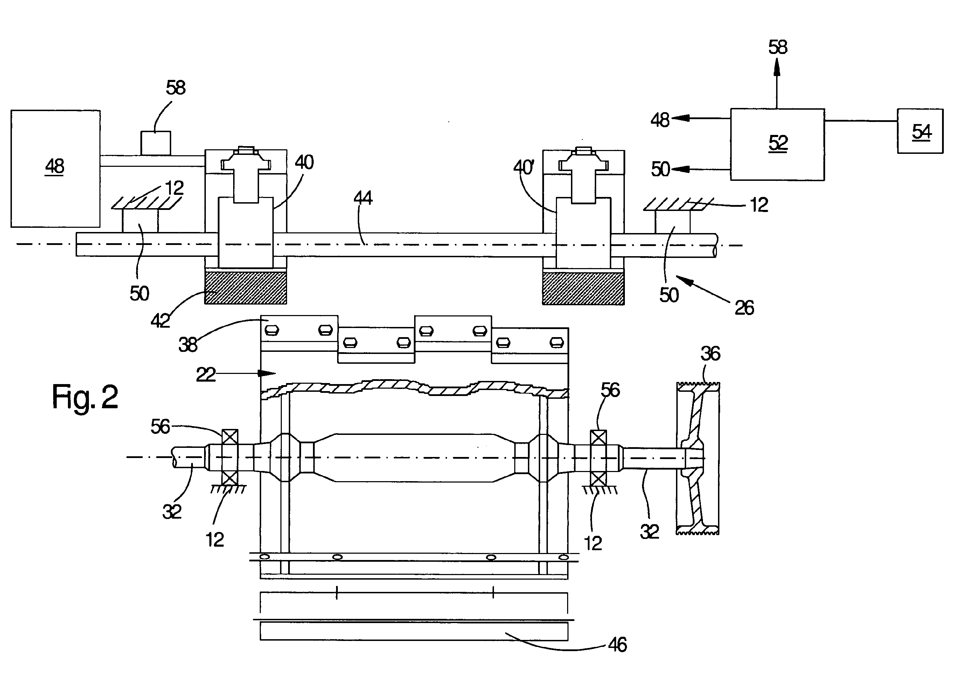

In der Figur 2 ist schematisch eine Ansicht einer Häckseleinrichtung 22 und einer ihr zugeordneten Schleifvorrichtung 26 wiedergegeben, wie sie sich bei einer Betrachtung der Erntemaschine 10 in Figur 1 (bezüglich der Bewegungsrichtung) von vorn ergibt. Die Häckseleinrichtung 22 weist eine Anzahl über ihre Breite und ihren Umfang verteilter Messer 38 auf, die in Zusammenwirken mit einer starren Gegenschneide 46 durch die Erntegutaufnahmeeinrichtung 20 aufgenommenes Erntegut zerteilen. Die Häckseleinrichtung 22 umfasst eine zentrale Welle 32, die über eine stirnseitige Riemenscheibe 36 und nicht dargestellte Riemen durch einen Motor der Erntemaschine 10 rotativ antreibbar ist. Die Welle 32 stützt sich durch zwei beidseits der Häckseleinrichtung 22 angeordnete Wälzlager 56 am Rahmen 12 der Erntemaschine 10 ab.

Um nach einer bestimmten Betriebsdauer die Messer 38 schärfen zu können, ohne die einzelnen Messer 38 oder die gesamte Häckseleinrichtung 22 ausbauen zu müssen, ist oberhalb der Häckseleinrichtung 22 nahe des von den Messern 38 beschriebenen Hüllkreises die Schleifvorrichtung 26 vorgesehen, die im Wesentlichen einen Schleifstein 42, eine diesem zugeordnete Schleifsteinhalterung 40 und eine parallel zur Welle 32 orientierte Achse 44 umfasst, auf der die Schleifsteinhalterung 40 verschiebbar gelagert ist.

Sollen die Messer 38 geschärft werden, wird die Häckseleinrichtung 22 in Rotation versetzt, in der Regel in umgekehrter Drehrichtung und/oder mit reduzierter Drehzahl, verglichen mit normalem Häckselbetrieb. Die Schleifsteinhalterung 40 mit dem daran befestigten Schleifstein 42 wird mittels einer Bewegungseinrichtung 48 aus einer (nicht eingezeichneten) Ruhe- oder Parkposition, in der sie seitlich neben der Häckseleinrichtung 22 angeordnet ist, über die gesamte Breite der Häckseleinrichtung 22 verschoben. Dabei ist die Unterseite des Schleifsteins 42 in Kontakt mit den Messern 38 und schärft sie. Beim Schleifvorgang wird der Schleifstein 42 mehrere Male über die Breite der Häckseleinrichtung 22 verfahren. Die Endpunkte dieser Verschiebebewegung sind in der Figur 2 durch die Schleifsteinhalterungen mit den Bezugsziffern 40 am linken Umkehrpunkt und 40' am rechten Umkehrpunkt dargestellt.

Zwischen den Verschiebebewegungen kann ein Zustellen des Schleifsteins 42 erfolgen, also eine geringfügige Bewegung des Schleifsteins 42 auf die Messer 38 zu. In der dargestellten Ausführungsform wird dazu ein mechanisches Element (Klinkenrad) verwendet, das bei Erreichen eines oder beider Umkehrpunkte der Schleifsteinhalterung 40 mit einem rahmenfesten Element zusammenwirkt. Die Drehung des mechanischen Elements wird mittels eines Gewindes in eine Verschiebebewegung umgewandelt, so dass der Schleifstein 42 zur Häckseleinrichtung 22 zugestellt wird. Durch eine Verschiebung des Schleifsteins 42 nur über einen eingeschränkten seitlichen Verschiebebereich kann ein Zustellen vermieden werden, da das mechanische Element dann nicht mit dem ortsfesten Element in Kontakt kommt. Ein derartiges Schleifen ohne Zustellen ist beim den Schleifvorgang abschließenden Schlichten zweckmäßig.

Die Bewegungseinrichtung 48 der Schleifvorrichtung 26 wird durch eine in der Figur 2 schematisch wiedergegebene Steuerung 52 gesteuert, die sowohl die Verschiebung des Schleifsteins 42 durch die Bewegungseinrichtung 48, als auch - in der oben beschriebenen Weise - das Zustellen steuert. Die Steuerung 52 wird mit einer Information über die jeweilige Position des Schleifsteins 42 beaufschlagt, was über einen entsprechenden Sensor 58 erfolgen kann, der die jeweilige Position der Bewegungseinrichtung 48 erfasst, oder dadurch, dass der Steuerung 52 eine Information vorliegt, in welche Stellung sie die Schleifsteinhalterung 40 verbracht hat. Dazu kann beispielsweise die Anzahl der Impulse gespeichert werden, die an einen Schrittmotor der Bewegungseinrichtung 48 abgegeben wurden. Die Steuerung 52 kann außerdem den Antrieb der Häckseleinrichtung 22 steuern.

Anzumerken ist, dass das Zustellen auch durch einen separaten Motor, insbesondere einen Elektro- oder Hydraulikmotor bewirkt werden könnte, der ebenfalls mit der Steuerung 52 zu verbinden wäre. Anstelle eines Zustellens durch Verschieben des Schleifsteins 42 könnte auch die ganze Schleifsteinhalterung 40 bzw. die Achse 44 zugestellt werden.

Die Steuerung 52 ist mit einem Speicher 54 und mit zwei Kraftmesszellen 50 verbunden, die als Messeinrichtung dienen. Die Kraftmesszellen 50 sind nahe beider Enden der Achse 44 zwischen der Achse 50 und dem Rahmen 12 bzw. einem mit ihm verbundenen Element angeordnet. Die Kraftmesszellen 50 können beliebiger Ausführungsform sein, wie Piezosensoren oder Dehnungsmessstreifen. Sie liefern der Steuerung 52 einen Messwert, der proportional zu der Kraft ist, die der Schleifstein 42 auf die Messer 38 ausübt bzw. umgekehrt. Diese Kraft enthält eine Information über die von den Messern 38 an der jeweiligen Position des Schleifsteins 42 beschriebenen Hüllkurve. Ist die Schleifsteinhalterung 40 auf zwei sich parallel erstreckenden Achsen 44 abgestützt, können jeder der Achsen 44 zwei endseitige Kraftmesszellen 50 zugeordnet werden, oder die Achsen 44 werden an beiden Enden untereinander verbunden und jeweils über eine einzige Kraftmesszelle 50 am Rahmen 12 abgestützt. Denkbar ist auch die Verwendung einer einzigen Achse 44 mit nichtkreisförmigem (z. B. rechteckigem) Querschnitt.

Ein Schleifvorgang kann ablaufen, wie in der DE 100 35 743 A beschrieben. Die Steuerung 52 veranlasst nach dem Beginn des Schleifvorgangs, dass der Schleifstein 42 durch die Bewegungseinrichtung 48 über die Breite der Häckseleinrichtung 22 verfahren und wieder zurück in die Ursprungsposition verfahren wird. Dabei kann der Schleifstein 42 in der Position verbleiben, in die er beim vorhergehenden Schleifvorgang gebracht wurde, oder ggf. demgegenüber zur Häckseleinrichtung 22 zugestellt werden. Dieser Vorgang kann dazu dienen, festzustellen, ob ein Zustellen des Schleifsteins 42 erforderlich ist. Das ist dann der Fall, wenn an wenigstens einer Stelle der Häckseleinrichtung 22 kein (oder ein relativ geringes) Signal von der Kraftmesszelle 50 erzeugt wird. In diesem Fall ist eine Delle, Einbuchtung oder dergleichen in den Messern 38, die ohne Zustellen nicht ausgeglichen werden kann. Dieser Vorgang kann auch entfallen, insbesondere wenn im Anschluss noch eine Kontrolle durchgeführt wird, ob der Schleifvorgang erfolgreich war.

Beim Überstreichen der Breite der Häckseleinrichtung 22 erzeugt die Kraftmesszelle 50 ein Signal, das von dem Abstand der Schneidkanten der Messer 38 vom Schleifstein 42 abhängt. Die Steuerung 52 wird über einen geeigneten Analog/Digitalwandler mit einer Information über die Amplitude dieses Signals beaufschlagt.

Der Schleifstein 42 wird dann zunächst nicht weiter zugestellt und in eine erste Position an der Häckseleinrichtung 22 verbracht, in der Regel links oder rechts außen. Er verbleibt in dieser Position, bis die Kraftmesszelle 50 ein Ausgangssignal erzeugt, das einer gewünschten Kraft zwischen dem Schleifstein 42 und den Schneidkanten der Messer 38 entspricht, so dass eine hinreichende Schärfung der mit dem Schleifstein 42 zusammenwirkenden Teile der Messer 38 erzielt wird. Danach wird der Schleifstein 42 durch die Bewegungseinrichtung 48 um eine seiner Breite entsprechenden Strecke weiter nach links oder rechts transportiert und schleift dort die Messer 38. Auf diese Weise wird sukzessive die gesamte Breite der Häckseleinrichtung 22 bearbeitet. In der Regel wird der beschriebene Vorgang mit umkehrter Bewegungsrichtung des Schleifsteins 42 wiederholt und/oder mehrfach ausgeführt. Zum Abschluss des Schleifvorgangs kann in an sich bekannter Weise ein normales Schleifen und/oder Schlichten der gesamten Häckseleinrichtung 22 erfolgen. Schließlich wird der Schleifstein 42 in seine Parkposition verbracht.

Ein dazu alternativer Schleifvorgang verläuft derart, dass der Schleifstein 42 fortdauernd über die gesamte Breite der Häckseleinrichtung 22 verfahren wird, bis ein konstanter Abstand zwischen Welle 32 und Schneidkanten der Messer 38 hergestellt ist. Die Steuerung 50 erkennt am Ausgangssignal der Kraftmesszelle 50, ob ein konstanter Abstand zwischen Welle 32 und Schneidkanten der Messer 38 erreicht wurde und dementsprechend der Schleifvorgang beendet werden kann. Auch in diesem Modus kann ein Zustellen des Schleifsteins 42 erfolgen, wenn an einer oder mehreren Stellen der Häckseleinrichtung 22 von der Kraftmesszelle 50 kein Kontakt zwischen Schleifstein 42 und Messern 38 nachgewiesen wird.

Zur Erfolgskontrolle, bzw. da sich der Schleifstein 42 beim Schleifen abnutzt, was zu einem nicht befriedigenden Ergebnis des Schleifvorgangs führen kann, kann die Steuerung vor dem Schlichten bzw. einem sich anschließenden normalen Schleifvorgang noch einmal die Schleifsteinhalterung 40 über die Breite der Häckseleinrichtung 22 verfahren und durch die Kraftmesszelle 50 die Abstände zwischen Welle 32 und Schneidkanten der Messer 38 erfassen. Ist die dabei erfasste Form der Schneidkanten der Messer 38 nicht zufriedenstellend, erfolgt ein neuer Schleifvorgang in der oben beschriebenen Weise.

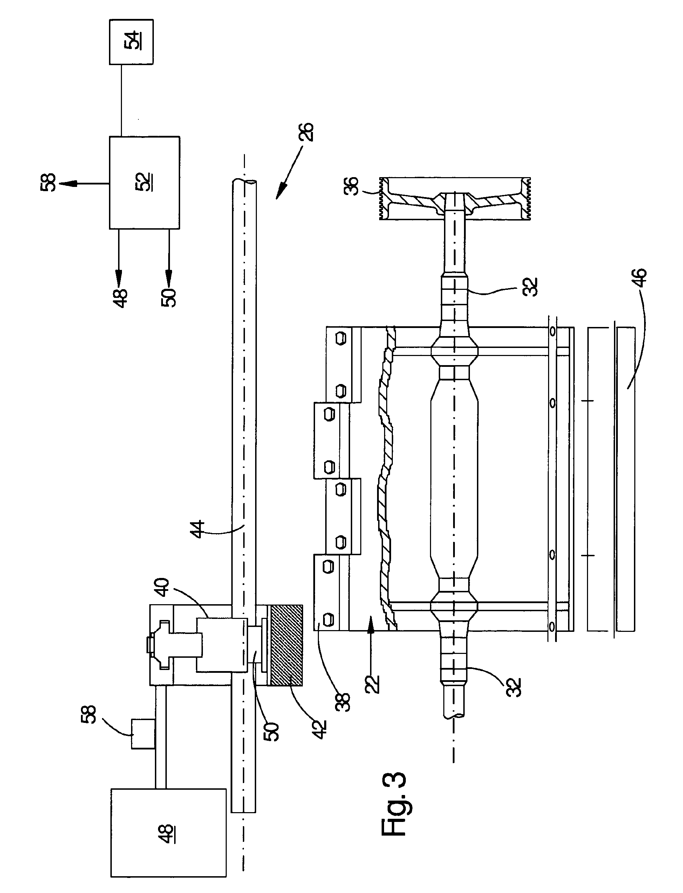

In der Figur 3 ist eine zweite Ausführungsform einer erfindungsgemäßen Schleifvorrichtung 26 wiedergegeben. Teilen, die denen der ersten Ausführungsform entsprechen, sind übereinstimmende Bezugszeichen zugeordnet. Ein Unterschied besteht bezüglich der Kraftmesszelle 50, die in der Ausführungsform gemäß Figur 3 zwischen dem Schleifstein 42 und der Schleifsteinhalterung 40 angeordnet ist. Auch hier liefert die Kraftmesszelle 50 eine Information hinsichtlich der vom Schleifstein 42 auf die Messer 38 ausgeübte Kraft. Die Steuerung 52 steuert die Bewegungseinrichtung 48 in Abhängigkeit von dieser Information in der oben beschriebenen Weise. Die elektrische Verbindung zwischen der Kraftmesszelle 50 und der Steuerung 52 kann durch ein flexibles Kabel oder einen mit der Steuerung 52 verbundenen, rahmenfesten und gegenüber der Achse 44 elektrisch isolierten Kontaktstreifen an der Achse 44 erfolgen, mit der ein Schleifer an der Schleifsteinhalterung 40 zusammenwirkt, welcher mit der Kraftmesszelle 50 verbunden ist. Alternativ ist eine Funkverbindung zwischen der Kraftmesszelle 50 und der Steuerung 52 vorgesehen.

## Patentansprüche

1. Häckseleinrichtung (22) mit mindestens einem Messer (38) sowie einer Schleifvorrichtung (26) mit einem Schleifstein (42) zum Schleifen des Messers (38), einer Bewegungseinrichtung (48) zum Bewegen des Schleifsteins (42) entlang der Häckseleinrichtung (22), einer Messeinrichtung zur Bereitstellung eines Signals, das eine Information über die beim Schleifvorgang vom Schleifstein (42) auf das Messer (38) ausgeübte Kraft enthält, und einer Steuerung (52), die die Bewegungseinrichtung (48) in Abhängigkeit von dem Signal der Messeinrichtung steuert, **dadurch gekennzeichnet, dass** die Messeinrichtung eine Kraftmesszelle (50) umfasst, die in den Kraftfluss zwischen dem Schleifstein (42) und der Häckseleinrichtung (22) eingefügt ist.

2. Häckseleinrichtung (22) nach Anspruch 1, **dadurch gekennzeichnet, dass** die Steuerung (52) die Bewegungseinrichtung (48) in Abhängigkeit von dem Signal der Kraftmesszelle (50) derart steuert, dass die Schneidkante des Messers (38) in eine vorbestimmte und/oder vorgebbare Sollform gebracht wird.

3. Häckseleinrichtung (22) nach Anspruch 1 oder 2, **dadurch gekennzeichnet, dass** die Kraftmesszelle (50) zwischen einer den Schleifstein (42) haltenden Schleifsteinhalterung (40) und einem die Schleifsteinhalterung (40) haltenden Rahmen (12), an dem auch die Häckseleinrichtung (22) gelagert ist, eingefügt ist.

4. Häckseleinrichtung (22) nach Anspruch 3, **dadurch gekennzeichnet, dass** die Kraftmesszelle (50) zwischen einer Achse (44), auf der die Schleifsteinhalterung (40) verschiebbar abgestützt ist, und dem Rahmen (12) angeordnet ist.

5. Häckseleinrichtung (22) nach Anspruch 1 oder 2, **dadurch gekennzeichnet, dass** die Kraftmesszelle (50) zwischen dem Schleifstein (42) und einer den Schleifstein (42) haltenden Schleifsteinhalterung (40) angeordnet ist.

6. Häckseleinrichtung (22) nach einem der vorhergehenden Ansprüche, **dadurch gekennzeichnet, dass** die Steuerung (52) ein Fehlersignal bereitstellt, falls der Messwert der Kraftmesszelle (50) über einem Schwellenwert liegt.

7. Erntemaschine (10), insbesondere selbstfahrender, angebauter oder gezogener Feldhäcksler, mit einer Häckseleinrichtung (22) nach einem der vorhergehenden Ansprüche.

## Claims

1. A chopper device (22) with at least one blade (38) and a sharpening device (26) with a grindstone (42) for sharpening the blade (38), a movement device (48) for moving the grindstone (42) along the chopper device (22), a measuring device for providing a signal which contains information regarding the force exerted on the blade (38) by the grindstone (42) during the sharpening operation, and a control means (52) which controls the movement device (48) in dependence on the signal of the measuring device, **characterized in that** the measuring device comprises a force measurement cell (50) which is introduced into the force flux between the grindstone (42) and the chopper device (22).

2. A chopper device (22) according to claim 1, **characterized in that** the control means (52) so controls the movement device (48) in dependence on the signal of the force measurement cell (50) that the cutting edge of the blade (38) is brought to a set form which is or can be predetermined.

3. A chopper device (22) according to claim 1 or 2, **characterized in that** the force measurement cell (50) is introduced between a grindstone carrier (40) and a frame (12) holding the grindstone carrier (40) on which frame the chopper device (22) is also mounted.

4. A chopper device (22) according to claim 3, **characterized in that** the force measurement cell (50) is arranged between an axle (44) on which the grindstone carrier (40) is slidably supported and the frame (12).

5. A chopper device (22) according to claim 1 or 2, **characterized in that** the force measurement cell (50) is arranged between the grindstone (42) and a grindstone carrier (40) holding the grindstone (42).

6. A chopper device (22) according to any of the preceding claims, **characterized in that** the control means (52) provides an error signal should the measured value of the force measurement cell (50) lie above a threshold value.

7. A harvesting machine (10), especially a self-propelled or towed forage harvester, with a chopper device (22) according to any of the preceding claims.

## Revendications

1. Dispositif de hachage (22) comportant au moins une lame de coupe (38), ainsi qu'un dispositif d'affûtage (26) avec un affiloir (42) destiné à affûter la lame de coupe (38), un dispositif d'actionnement (48) destiné à déplacer l'affiloir (42) le long du dispositif de hachage (22), un dispositif de mesure destiné à délivrer un signal, qui contient une information sur la force exercée par l'affiloir (42) sur la lame de coupe (38) pendant le processus d'affûtage, et une commande (52) qui commande le dispositif d'actionnement (48) en fonction du signal du dispositif de mesure, **caractérisé en ce que** le dispositif de mesure comporte une cellule dynamométrique (50), qui est insérée dans le flux de force entre l'affiloir (42) et le dispositif de hachage (22).

2. Dispositif de hachage (22) selon la revendication 1, **caractérisé en ce que** la commande (52) commande le dispositif d'actionnement (48) en fonction du signal de la cellule dynamométrique (50), de telle sorte que le tranchant de la lame de coupe (38) est amené dans une forme de consigne prédéterminée et/ou prédéfinissable.

3. Dispositif de hachage (22) selon la revendication 1 ou 2, **caractérisé en ce que** la cellule dynamométrique (50) est insérée entre un porte-affiloir (40), supportant l'affiloir (42), et un bâti (12), qui maintient le porte-affiloir (40) et sur lequel est monté le dispositif de hachage (22).

4. Dispositif de hachage (22) selon la revendication 3, **caractérisé en ce que** la cellule dynamométrique (50) est agencée entre un axe (44), sur lequel le porte-affiloir (40) prend appui de manière mobile, et le bâti (12).

5. Dispositif de hachage (22) selon la revendication 1 ou 2, **caractérisé en ce que** la cellule dynamométrique (50) est agencée entre l'affiloir (42) et un porte-affiloir (40) supportant l'affiloir (42).

6. Dispositif de hachage (22), selon l'une quelconque des revendications précédentes, **caractérisé en ce que** la commande (52) délivre un signal d'erreur lorsque la valeur de mesure de la cellule dynamométrique (50) se situe au-dessus d'une valeur seuil.

7. Machine de récolte (10), en particulier ensileuse automotrice, assemblée ou tractée, comportant un dispositif de hachage (22) selon l'une quelconque des revendications précédentes.
